Europäisches Patentamt

European Patent Office

Office européen des brevets

(19)

(11) Publication number: **0 523 142 B1**

(12) **EUROPEAN PATENT SPECIFICATION**

(45) Date of publication of patent specification: **13.12.95**　(51) Int. Cl.⁶: **B60L 11/18**

(21) Application number: **91907517.6**

(22) Date of filing: **05.04.91**

(86) International application number:
**PCT/GB91/00533**

(87) International publication number:
**WO 91/15379 (17.10.91 91/24)**

(54) **SPEED CONTROL SYSTEM**

(30) Priority: **06.04.90 GB 9007871**

(43) Date of publication of application:
**20.01.93 Bulletin 93/03**

(45) Publication of the grant of the patent:
**13.12.95 Bulletin 95/50**

(84) Designated Contracting States:
**DE FR GB IT SE**

(56) References cited:
**DE-A- 3 826 097**
**GB-A- 1 396 416**
**GB-A- 2 034 989**
**US-A- 4 472 663**

(73) Proprietor: **SEVCON LIMITED**
**Kingsway**
**Gateshead,**
**Tyne & Wear NE11 0OA (GB)**

(72) Inventor: **MILLER, David**
**8 Parkdale Rise**
**Whickham,**
**Newcastle-upon-Tyne NE16 5ZB (GB)**

(74) Representative: **Brown, David Alan et al**
**Mathys & Squire**
**100 Grays Inn Road**
**London WC1X 8AL (GB)**

EP 0 523 142 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to speed control systems for DC motors.

More particularly, but not exclusively the invention relates to speed control systems for DC series wound or permanent magnet traction motors of industrial vehicles, such as forklift trucks.

It is often necessary to limit the maximum speed of a vehicle, for safety reasons. For example, new EEC regulations may require forklift trucks of the kind generally known as "walkie" trucks, as well as some small "ride-on" trucks, to have a maximum speed of 6 kilometres per hour. Larger fork lift trucks require their maximum speed to be reduced as the fork height or load increases, to maintain stability. Maximum speed limits are also required on other vehicles, such as those used on railway platforms or at airport terminals, where speed needs to be limited for passenger safety.

Known systems for control of maximum speed usually operate by limiting the applied motor voltage to a preset maximum. This has the disadvantage that, with a series motor, motor speed for a given voltage decreases with increasing load, so that if the preset maximum voltage is set to be appropriate to the maximum speed for an unloaded vehicle, the maximum speed of the vehicle under load will be unnecessarily low. Shunt motors inherently provide speed control substantially independent of load, but are not widely used as traction motors for industrial vehicles because they require more expensive controllers and can suffer from poor starting torque. There are also available speed control systems which employ an external tachometer probe, for example with a sensor linked to a ground wheel or the transmission of the vehicle to provide a measure of vehicle speed which is used to control the maximum motor speed (e.g. DE-A-3 826 097). Whilst such systems provide acceptable control of maximum speed, the need for an external probe and interface electronics to supply the signal from the probe to the controller makes them expensive and the need to mount the probe imposes mechanical constraints on the system.

It is an object of this invention to provide a speed control system which avoids these disadvantages.

This invention consists in a speed control system for a DC motor, comprising control means for controlling the motor voltage, means for sensing the motor voltage, and means for sensing motor current, characterised in that the control system includes means adapted to receive as an input parameter or parameters the value of sensed motor voltage and/or sensed motor current and to derive from the value of the input parameter or parameters a value for an output parameter related to the speed of the motor, the output parameter being a parameter different from the input parameter or parameters, and means for comparing the derived value of the output parameter with a reference value of the output parameter corresponding to a predetermined motor speed and for controlling the motor voltage in response to the comparison, thereby to control the speed of the motor.

In one form of the invention, the input parameter is sensed motor current, the output parameter is motor voltage, and the system includes means for deriving from the value of the sensed motor current a value for the motor voltage which would correspond to the sensed motor current at a predetermined motor speed, and means for comparing the derived value of the motor voltage with the sensed motor voltage and for controlling the actual motor voltage in response to the comparison thereby to control the motor speed.

Preferably, the means for deriving a value for the motor voltage comprises a memory device for storing data representing the variation of motor voltage with motor current for the predetermined maximum speed limit, and a microprocessor programmed to derive from the stored data and from an input representing the value of the motor current the value of motor voltage appropriate to the sensed motor current at the predetermined speed.

Alternatively, the means for deriving a value may comprise a memory device for storing data representing the variation of motor voltage with motor current for a predetermined reference speed, and a microprocessor programmed to derive from the stored data and from an input representing the value of the sensed motor current the motor voltage appropriate to the sensed motor current for a predetermined motor speed different from the reference speed.

Preferably, the microprocessor is programmed to operate with two or more different predetermined motor speeds, or a continuously adjustable motor speed limit, the appropriate values being calculated from the data stored for the reference speed.

The stored data may include data representing the variation of motor voltage with motor current for the stalled condition of the motor (i.e. at zero speed), so that calculations of values for a predetermined speed limit from the stored data for the reference speed can be carried out more accurately.

Instead of deriving from the sensed motor current a value for the motor voltage appropriate to the sensed motor current at the predetermined speed, the system of the invention could operate by deriving from the sensed motor voltage a value for the motor current appropriate to the sensed motor voltage at the predetermined speed, and comparing the derived value with the value of the sensed motor current.

In another form of the invention, the input parameters are both sensed motor voltage and sensed motor current, the output parameter is the actual speed of the motor, and the system includes means for deriving the value of the actual motor speed from the sensed values of motor current and motor voltage and means for comparing the derived value with a predetermined reference speed.

Preferably, the means for deriving a value of the actual motor speed comprises a memory device for storing data representing the variation with motor current of a parameter equal to or proportional to the magnetic flux of the motor, and a microprocessor programmed to derive from the stored data a value of this parameter corresponding to the sensed motor current and to calculate from the value of this parameter and the values of sensed motor current and sensed motor voltage, a value for the actual motor speed.

Suitably, the control means comprises a chopper circuit for connection in series between the motor and a DC supply, typically the battery of a vehicle.

The speed control system of the invention enables acceptable speed limit control to be achieved without the need for expensive additional components.

The invention will now be described, by way of example, with reference to the accompanying drawings in which:

Figure 1 is a diagram of the power circuit of a DC motor controller;

Figure 2 is a block diagram of part of the control circuits of the controller;

Figure 3 is a diagram illustrating the variation of motor voltage and motor current for a typical series motor; and

Figure 4 is a diagram illustrating the variation of the magnetic flux of a series motor with motor current.

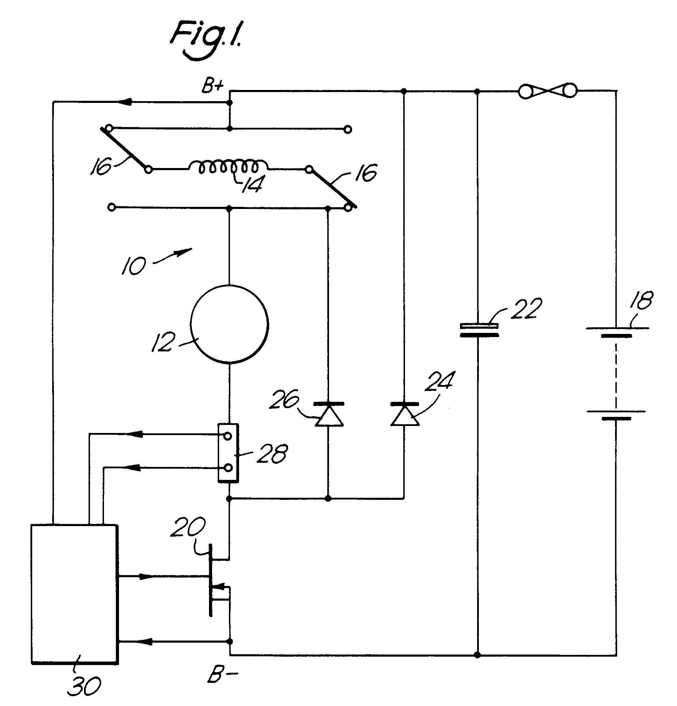

Referring to Figure 1, a DC series wound traction motor 10 has an armature 12 and a field winding 14 connecting in series with the armature through direction contactors 16. A controller for the motor includes a chopper unit, employing a main switching device in the form of a MOSFET (metal-oxide-silicon field-effect transistor) 20 connected in series with the motor and a battery 18. A smoothing capacitor 22 is connected across the battery 18. A freewheel diode 24 is connected across the motor and a plug diode 26 is connected across the armature. The MOSFET 20 is switched on and off in response to signals from a control circuit 30, to control the average voltage applied to the motor. A shunt 28 in series with the motor armature 12 provides a signal giving a measure of the motor current.

The power circuit shown in Figure 1 operates in the same manner as a conventional pulse-width modulated chopper control, and it will therefore not be described in further detail.

The control circuit 30 includes a microprocessor 32, the output of which controls the timing of voltage signals applied to the gate of MOSFET 20 by a driver circuit 34, so as to control the percentage on-time of the chopper. The microprocessor 32 receives an input from a circuit 36 linked to the manual speed control, which may be the control handle or accelarator pedal of the vehicle. The microprocessor also receives an input representing the motor current, from circuit 38 connected to the shunt 28, and an input representing the battery voltage from a circuit 40 connected to the positive and negative lines of the power circuit. A memory 42, preferably in the form of an EPROM (electrically programmable read-only memory) stores data, in the form of a look-up table, which enables the microprocessor to determine, for any value of the motor current measured by the shunt 28, the corresponding motor voltage appropriate for a motor speed equal to a predetermined maximum speed, as described in more detail below.

The control circuit is programmed to control the percentage on-time of the MOSFET 20 so as to control the motor voltage. The microprocessor 32 repeatedly executes a series of operations in which it calculates the required percentage on-time as a function of the information it receives representing the present percentage on-time, the accelerator demand, and the existing motor voltage, together with the speed limit information described below. The calculation is carried out in accordance with suitable algorithims designed to determine the appropriate motor voltage in accordance with the accelerator demand, and to ensure smooth operation of the vehicle, so that, for example, if the accelerator demand is suddenly increased, the motor voltage is increased gradually to a value appropriate to the new demand, allowing the vehicle to accelerate smoothly. In accordance with the invention, the control circuit is programmed to continuously monitor the motor current and motor voltage and to detect when the motor speed exceeds the predetermined maximum speed, by determining from the data stored in the memory 42 the motor voltage appropriate to the measured motor current at the maximum speed limit, and comparing this voltage with the measured motor voltage.

Thus, the microprocessor receives from the circuit 38 an input representing the sensed motor current. The input is fed through the look-up table held in the memory 42, which returns a value representing the motor voltage corresponding to the sensed motor current for the predetermined maximum speed. From the circuit 40 the microprocessor receives an input representing the battery voltage. This is multiplied by the present value of the percentage on-time of the chopper, to determine the actual motor voltage. The value of the actual motor voltage is compared in the microprocessor with the value of the voltage returned by the look-up table. The comparison is used to influence the control of the percentage on-time of the chopper to ensure that the speed of the motor does not exceed the predetermined speed limit. Thus, if the actual motor voltage is greater than the value returned by the look-up table, indicating that that motor speed exceeds the speed limit, then the percentage on-time of the chopper will be reduced to bring the motor speed back to the limit speed at a suitable rate. The value of the motor voltage returned by the look-up table provides an additional parameter used by the microprocessor in its calculations employing suitable alogrithims as mentioned above. This can also be used to influence the motor control when the motor speed is below the predetermined speed limit. For example, if the speed is below the limit and the accelerator demand is increased to a high level, the values derived from the look-up table will be used in the calculations in order to control the applied motor voltage to ensure that the motor speed is increased smoothly to the maximum speed.

The control circuit may be programmed to operate with a single predetermined maximum speed appropriate for the motor with which the control circuit is to be employed. However, it would be useful to be able to set the control circuit to operate at more than one predetermined maximum speed. For example, the controller manufacturer may wish to offer a controller which can be set, by the manufacturer or the customer, to operate at one of a selection of maximum speeds. In some applications, it is desirable for the controller to be able to operate at two or more different maximum speed settings and to switch between settings in response to a suitable input. For example, it is advantageous to be able to operate a fork lift truck with one maximum speed setting with the forks in a low position and a second, lower, maximum speed setting when the forks are raised to a high level.

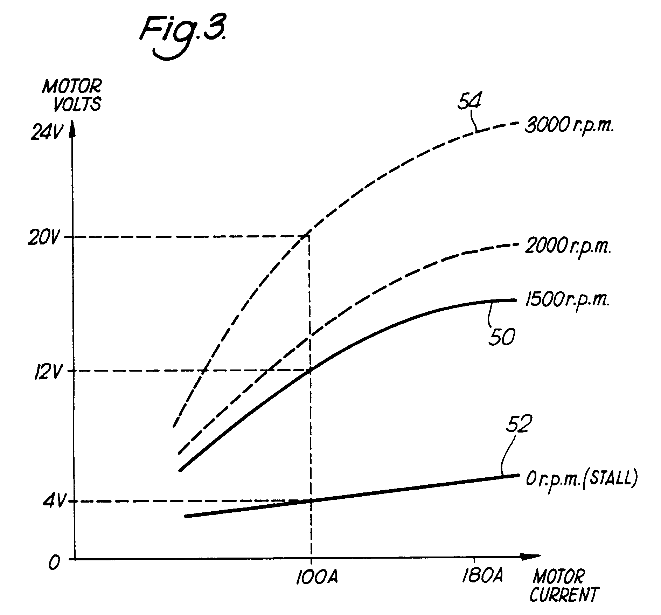

This may be achieved in the control system of the invention by storing in the memory of the control circuit data corresponding to the curves of motor voltage against motor current for more than one predetermined speed. However, to avoid the need to store data corresponding to a number of different voltage-current curves, in the preferred embodiment of the invention, data representing the motor voltage-current curve for only one predetermined speed is stored in the memory, together with data representing the voltage current characteristic in the stalled condition of the motor, and the microprocessor is programmed to derive from this stored data the corresponding data appropriate to other motor speeds. This will be explained with reference to Figure 3.

In Figure 3, the curve 50 shows the motor voltage-current characteristic for a speed (say 1,500 rpm) which is less than the greatest value of the maximum speed limit which may be required (say 3,000 rpm). Data representing the curve 50, obtained by sampling the curve at suitable intervals, is stored in the memory 42. The curve 52 represents the voltage-current characteristic in the motor in the stalled condition (i.e. at zero speed). Data representing this stall curve is also stored in the memory 42, in the form of a look-up table.

Curve 54 shows the motor voltage-current characteristic for a motor speed of 3,000 rpm, i.e. twice that of curve 50. For any given current, the difference between the voltage given by curve 54 (3,000 rpm) and the voltage given by curve 52 (stall) will be twice the difference between the voltage on curve 50 (1,500 rpm) and curve 52 (stall). For example, as shown in Figure 3, for a motor current of 100 amps, the motor voltage at 3,000 rpm is 20 volts, at 1,500 rpm is 12 volts and at stall is 4 volts. The appropriate motor voltage at 3,000 rpm for any current can therefore be calculated from the data representing the 1,500 rpm curve 50 and the stall curve 52. Similarly, the voltage appropriate to any other motor speed can be calculated from the data representing curves 50 and 52 and employing a factor equal to the ratio of the required motor speed and 1,500 rpm. Clearly, since the factor can be greater or less than unity, the calculation can be made for motor speeds both above and below 1,500 rpm.

In one embodiment of the invention, the data stored in the memory 42 represents the motor voltage-current curve for a predetermined speed which is about 50% of the highest speed limit setting which would be required. The controller is then "calibrated" by programming into the processor the factors required to enable the desired speed limit setting or settings to be determined. The controller may be arranged to receive additional inputs, to cause the controller to select one from a number of predetermined speed limit settings. For example, the controller may receive an input from a microswitch operated by the forks of a fork lift truck when they are raised to a preset height, to cause the controller to operate at a reduced speed limit setting.

The control circuit may be programmed for a particular motor, by taking suitable measurements of the motor voltage-current characteristics. In a preferred form of the invention, the control circuit of a motor installed in a vehicle can be "calibrated" on-site, by using an external tachometer to provide a signal when the vehicle is travelling at a predetermined reference speed, the signal then triggering the control circuit to gather data from the sensed motor voltage and motor current. The vehicle is operated with various loads, so that sufficient data can be gathered to plot the motor voltage-current characteristic over a sufficient range of values. After calibration is completed, the tachometer is removed. To enable this calibration to be achieved, the EPROM 42 of the described embodiment may be replaced by an electrically erasable programmable read-only memory (EEPROM). Other forms of memory could be used, such as a masked read-only memory (ROM) or a one-time-programmable memory (OTP).

Alternatively, if the accuracy of the speed limit required is not critical, the control circuit may employ a standard voltage-current characteristic for the type of motor to be controlled.

The embodiment described above relies on the use of measured motor voltage as providing the measure of a parameter related to motor speed. It is also possible, in accordance with the invention, to derive from the sensed motor voltage and motor current a value for the motor speed. Whilst it is possible to calculate directly from the sensed motor voltage and motor current, together with the fixed motor characteristic, a value for the motor speed, the calculation involved is relatively complex, and to provide the control system with a microprocessor capable of carrying out the calculation at sufficient speed would make the system relatively expensive. It is therefore desirable to provide a method of deriving a value for the motor speed which requires only simple calculation and can therefore be carried out by the relatively inexpensive microprocessor. In a second embodiment of the invention, this is achieved by making use of the relationship between motor speed, motor voltage, motor current and the magnetic flux generated by the motor field winding. This relationship may be derived as follows:

Since the power input to the motor equals the power output plus losses:

$$VI = T\omega + I^2R + M \qquad (1)$$

where

    V    = motor voltage
    I    = motor current
    T    = motor torque
    $\omega$    = angular speed of rotation of motor
    $I^2R$    = resistive losses in the motor
    M    = other losses in the motor

Since the motor torque $T = k \phi I$, where $\phi$ is the magnetic flux generated by the field windings and k is a constant, this can be substituted in equation (1), giving:

$$VI = K \phi I\omega + I^2R + M \qquad (2)$$

The non-resistive losses represented by M are usually small compared to the other terms in this equation. Assuming that M may be neglected, equation (2) may be rewritten as:

$$\omega = \frac{V - IR}{k \phi} \quad \ldots\ldots\ldots\ldots\ldots\ldots\ldots\ldots\ldots\ldots\ldots\ldots\ldots\ldots (3)$$

In cases where the losses represented by the term M cannot be neglected, it is believed that they can be taken into account with sufficient accuracy by the use of a correction factor C, giving:

$$\omega = \frac{\{V - IR\}}{\{k \phi\}}.C \quad \ldots\ldots\ldots\ldots\ldots\ldots\ldots\ldots\ldots\ldots\ldots\ldots\ldots (4)$$

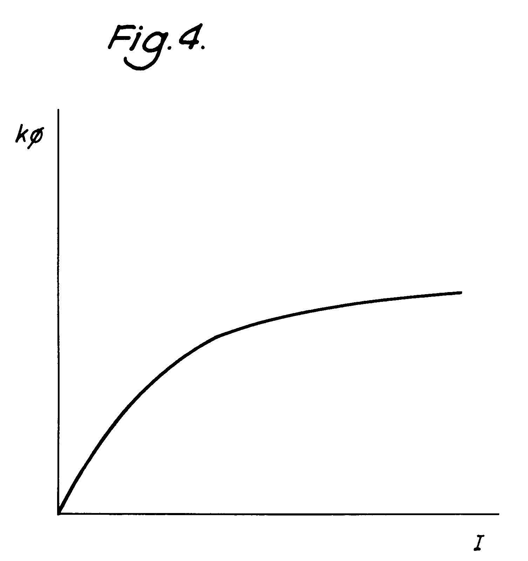

$k \phi$ is a function of motor current I which is independent of the motor speed $\omega$ and which can be determined empirically. Figure 4 shows a typical curve of $k \phi$ against I for a particular motor. The curve may be established, for example, by supplying a constant current to the field winding of the motor, rotating the armature at a known speed, measuring the open circuit armature voltage (back EMF) of the motor and calculating $k \phi$ from the following equation.

$$^VBEMF = k \phi\omega \qquad (5)$$

This is repeated for various values of I, to enable the curve to be established by interpolation between the sampled points.

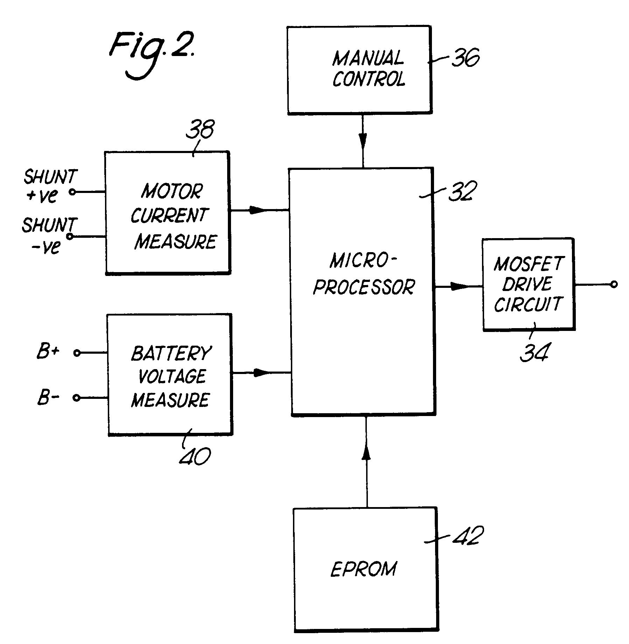

The second embodiment of the invention employs a control circuit similar to that shown in Figure 2, provided with inputs representing the sensed battery voltage, sensed motor current, and the demand setting of the manual control, as in the first described embodiment. The data representing the curve of k $\phi$ against I can be stored in the memory 42, in the form of a look-up table or other suitable form, together with the appropriate characteristics of the motor, including the value of resistance R and, if appropriate, the value of the correction factor C. In operation, the microprocessor 32 continuously monitors the sensed motor current (I) and the motor voltage (V), which it calculates by multiplying the battery voltage by the percentage on-time of the chopper. The value of k $\phi$ corresponding to the sensed motor current I is retrieved from memory 42. Using the values of I, V and k $\phi$ together with the value of R and, if appropriate, the correction factor C, the microprocessor calculates the angular speed of the motor, using equation (3) or (4). The calculated value is then compared with a reference value of the angular speed which is also stored in the memory 42. As in the first described embodiment, the comparison is used to control the percentage on-time of the chopper. For example, the reference value may be a maximum speed limit, or may be one of a series of reference values, or a continuously variable reference value.

Although the described embodiments refer to a control system for a DC series motor, the invention could also be applied to speed control systems for permanent magnet motors.

## Claims

1. A speed control system for a DC motor, comprising control means for controlling the motor voltage, means for sensing the motor voltage, and means for sensing motor current, characterised in that the control system includes means adapted to receive as an input parameter or parameters the value of sensed motor voltage and/or sensed motor current and to derive from the value of the input parameter or parameters a value for an output parameter related to the speed of the motor, the output parameter being a parameter different from the input parameter or parameters, and means for comparing the derived value of the output parameter with a reference value of the output parameter corresponding to a predetermined motor speed and for controlling the motor voltage in response to the comparison, thereby to control the speed of the motor.

2. A speed control system as claimed in Claim 1, in which the input parameter is sensed motor current, the output parameter is motor voltage, and the system includes means for deriving from the value of the sensed motor current a value for the motor voltage which would correspond to the sensed motor current at a predetermined motor speed, and means for comparing the derived value of the motor voltage with the sensed motor voltage and for controlling the actual motor voltage in response to the comparison thereby to control the motor speed.

3. A speed control system as claimed in Claim 2, in which the means for deriving a value for the motor voltage comprises a memory device for storing data representing the variation of motor voltage with motor current for the predetermined motor speed, and a microprocessor programmed to derive from the stored data and from an input representing the value of the motor current the value of motor voltage appropriate to the sensed motor current at the predetermined speed.

4. A speed control system as claimed in Claim 2, in which the means for deriving a value for the motor voltage comprises a memory device for storing data representing the variation of motor voltage with motor current for a predetermined reference speed, and a microprocessor programmed to derive from the stored data and from an input representing the value of the sensed motor current the motor voltage appropriate to the sensed motor current for a predetermined motor speed different from the reference speed.

5. A speed control system as claimed in Claim 2, in which the memory also stores data representing the variation of motor voltage and motor current for zero motor speed, and the microprocessor is programmed to derive the motor voltage appropriate to the sensed motor current at the predetermined motor speed by reading from the stored data the motor voltages appropriate to the sensed motor current at the predetermined reference speed and at zero speed calculating the difference between the two values, multiplying the difference by a factor equal to the ratio between the predetermined motor speed and the reference speed and adding to the result the motor voltage at zero speed.

6. A speed control system as claimed in Claim 2 or Claim 3, in which the microprocessor is programmed to derive from the stored data the motor voltage appropriate to the sensed motor current for a selected one of two or more different predetermined motor speeds, or for the desired value of a continuously variable reference speed.

7. A speed control system as claimed in claim 1, in which the input parameter is sensed motor voltage, the output parameter is motor current, and the system includes means for deriving from the value of the sensed motor voltage a value for the motor current which would correspond to the sensed motor voltage at a predetermined reference speed, means for comparing the derived value of motor current with the sensed motor current and for controlling the motor voltage in response to the comparison thereby to control the motor speed.

8. A speed control system as claimed in Claim 1, in which the input parameters are both sensed motor voltage and sensed motor current, the output parameter is the actual speed of the motor, and the system includes means for deriving the value of the actual motor speed from the sensed values of motor current and motor voltage and means for comparing the derived value with a predetermined reference speed.

9. A speed control system as claimed in Claim 8, in which the means for deriving the value of the actual motor speed comprises a memory device for storing data representing the variation with motor current of a parameter equal to or proportional to the magnetic flux of the motor, and a microprocessor programmed to derive from the stored data a value of this parameter corresponding to the sensed motor current and to calculate from the value of this parameter and the values of sensed motor current and sensed motor voltage, a value for the actual motor speed.

10. A speed control system as claimed in any preceding claim, in which the control means comprises a chopper circuit for connection in series with the motor and the DC source, and means for controlling the percentage on-time of the chopper circuit, and the means for sensing the motor voltage comprises means for sensing the voltage of the DC supply and calculating the motor voltage from the sensed value of the DC supply voltage and the percentage on-time of the chopper circuit.

**Patentansprüche**

1. Geschwindigkeits-Steuersystem für einen DC-Motor bzw. Gleichstrommotor mit einer Steuereinrichtung zur Steuerung der Motorspannung, einer Einrichtung, um die Motorspannung zu fühlen, und einer Einrichtung, um den Motorstrom zu fühlen, dadurch gekennzeichnet, daß das Steuersystem eine Einrichtung enthält, die daran angepaßt ist, als einen Eingangsparameter oder als Eingangsparameter den Wert der gefühlten Motorspannung und/oder des gefühlten Motorstroms zu empfangen und aus dem Wert des Eingangsparameters oder der Eingangsparameter einen Wert für einen Ausgangsparameter abzuleiten, der mit der Geschwindigkeit des Motors in Beziehung steht, wobei der Ausgangsparamter ein Parameter ist, der sich von dem Eingangsparameter oder den Eingangsparametern unterscheidet, und eine Einrichtung enthält, um den abgeleiteten Wert des Ausgangsparameters mit einem Bezugswert des Ausgangsparameters zu vergleichen, der einer vorbestimmten Motorgeschwindigkeit entspricht, und um die Motorspannung in Reaktion auf den Vergleich zu steuern, um dadurch die Geschwindigkeit des Motors zu steuern.

2. Geschwindigkeits-Steuersystem, wie im Anspruch 1 beansprucht, bei welchem der Eingangsparameter der gefühlte Motorstrom ist, der Ausgangsparameter die Motorspannung ist, und das System eine Einrichtung enthalt, um aus dem Wert des gefühlten Motorstroms einen Wert für die Motorspannung abzuleiten, die dem gefühlten Motorstrom bei einer vorbestimmten Motorgeschwindigkeit entsprechen wurde, und eine Einrichtung enthält, um den abgeleiteten Wert der Motorspannung mit der gefühlten Motorspannung zu vergleichen und um die aktuelle Motorspannung in Reaktion auf den Vergleich zu steuern, um dadurch die Motorgeschwindigkeit zu steuern.

3. Geschwindigkeits-Steuersystem, wie im Anspruch 2 beansprucht, bei welchem die Einrichtung zum Ableiten eines Wertes für die Motorspannung eine Speichervorrichtung aufweist, um Daten zu speichern, die die Änderung der Motorspannung mit dem Motorstrom für die vorbestimmte Motorspannung darstellen, und einen Mikroprozessor aufweist, der programmiert ist, um aus den gespeicherten Daten und aus einem Eingangssignal, das den Wert des Motorstroms darstellt, den Wert der Motorspannung abzuleiten, der für den gefühlten Motorstrom bei der vorbestimmten Geschwindigkeit geeignet ist.

4. Geschwindigkeits-Steuersystem, wie im Anspruch 2 beansprucht, bei welchem die Einrichtung zur Ableitung eines Wertes für die Motorspannung eine Speichervorrichtung zur Speicherung von Daten aufweist, die die Veränderung der Motorspannung mit dem Motorstrom für eine vorbestimmte Bezugsgeschwindigkeit darstellen, und einen Mikroprozessor aufweist, der programmiert ist, um aus den gespeicherten Daten und aus dem Eingangssignal, das den Wert des gefühlten Motorstroms darstellt, die für den gefühlten Motorstrom geeignete Motorspannung für eine vorbestimmte Motorgeschwindigkeit abzuleiten, die sich von der Bezugsgeschwindigkeit unterscheidet.

5. Geschwindigkeits-Steuersystem, wie im Anspruch 2 beansprucht, bei welchem der Speicher ebenso Daten speichert, die die Veränderung der Motorspannung und des Motorstromes bei einer Motorgeschwindigkeit von Null darstellen, und der Mikroprozessor programmiert ist, um die Motorspannung, die für den gefühlten Motorstrom bei der vorbestimmten Motorgeschwindigkeit geeignet ist, abzuleiten, indem aus den gespeicherten Daten die Motorspannungen gelesen werden, die für den gefühlten Motorstrom bei der vorbestimmten Bezugsgeschwindigkeit und bei einer Geschwindigkeit von Null geeignet sind, die Differenz zwischen den zwei Werten berechnet wird, die Differenz mit einem Faktor multipliziert wird, der dem Verhältnis zwischen der vorbestimmten Motorgeschwindigkeit und der Bezugsgeschwindigkeit gleicht, und zu dem Ergebnis die Motorspannung bei einer Geschwindigkeit von Null addiert wird.

6. Geschwindigkeits-Steuersystem, wie im Anspruch 2 oder Anspruch 3 beansprucht, bei welchem der Mikroprozessor programmiert ist, um aus den gespeicherten Daten die Motorspannung abzuleiten, die für den gefühlten Motorstrom geeignet ist, und zwar für eine ausgewählte von zwei oder mehr verschiedenen Motorgeschwindigkeiten oder für den gewünschten Wert einer kontinuierlich veränderlichen Bezugsgeschwindigkeit.

7. Geschwindigkeits-Steuersystem, wie im Anspruch 1 beansprucht, bei welchem der Eingangsparamter die gefühlte Motorspannung ist, der Ausgangsparameter der Motorstrom ist, und das System eine Einrichtung enthält, um aus dem Wert der gefühlten Motorspannung einen Wert für den Motorstrom abzuleiten, der dem gefühlten Motorstrom bei einer vorbestimmten Bezugsgeschwindigkeit entsprechen wurde, und eine Einrichtung enthält, um den abgeleiteten Wert des Motorstroms mit dem gefühlten Motorstrom zu vergleichen und um die Motorspannung in Reaktion auf den Vergleich zu steuern, um dadurch die Motorgeschwindigkeit zu steuern.

8. Geschwindigkeits-Steuersystem, wie im Anspruch 1 beansprucht, bei welchem die Eingangsparameter sowohl die gefühlte Motorspannung als auch der gefühlte Motorstrom sind, der Ausgangsparameter die aktuelle Geschwindigkeit des Motors ist, und das System eine Einrichtung zum Ableiten des Werts der aktuellen Motorgeschwindigkeit aus den gefühlten Werten des Motorstroms und der Motorspannung und eine Einrichtung zum Vergleichen des abgeleiteten Wertes mit einer vorbestimmten Bezugsgeschwindigkeit enthält.

9. Geschwindigkeits-Steuersystem, wie im Anspruch 8 beansprucht, bei welchem die Einrichtung zur Ableitung des Wertes der aktuellen Motorgeschwindigkeit eine Speichervorrichtung zum Speichern von Daten aufweist, die die Veränderung eines Parameters mit dem Motorstrom darstellen, der dem magnetischen Fluß des Motors gleicht oder zu diesem proportional ist, und einen Mikroprozessor aufweist, der programmiert ist, um aus den gespeicherten Daten einen Wert dieses Parameters abzuleiten, der dem gefühlten Motorstrom entspricht, und um aus dem Wert dieses Parameters und den Werten des gefühlten Motorstroms und der gefühlten Motorspannung, einen Wert für die aktuelle Motorgeschwindigkeit abzuleiten.

10. Geschwindigkeits-Steuersystem, wie in irgendeinem der vorhergehenden Ansprüche beansprucht, bei welchem die Steuereinrichtung eine Chopper-Schaltung bzw. Zerhacker-Schaltung, um diese mit dem Motor und der DC-Quelle bzw. Gleichstromquelle in Serie zu schalten, und eine Einrichtung, um den Prozentsatz der Ein-Zeit der Chopper-Schaltung zu steuern, aufweist, und die Einrichtung zum Fühlen der Motorspannung eine Einrichtung zum Fühlen der Spannung der DC-Quelle und zum Berechnen der Motorspannung aus dem gefühlten Wert der Spannung der DC-Quelle und dem Prozentsatz der Ein-Zeit der Chopper-Schaltung aufweist.

**Revendications**

1. Système de régulation de vitesse pour un moteur à courant continu, comprenant des moyens de réglage pour régler la tension du moteur, des moyens de détection de la tension du moteur et des moyens de détection du courant du moteur, caractérisé en ce que le système de régulation comprend des moyens prévus pour recevoir, comme paramètre ou paramètres d'entrée, la valeur de la tension de moteur détectée et/ou la valeur du courant de moteur détecté et pour établir, à partir de la valeur du ou des paramètres d'entrée, une valeur pour un paramètre de sortie lié à la vitesse du moteur, le paramètre de sortie étant un paramètre différent du ou des paramètres d'entrée, et des moyens de comparaison de la valeur établie du paramètre de sortie à une valeur de référence du paramètre de sortie correspondant à une vitesse de moteur prédéterminée, et de réglage de la tension de moteur en réponse à la comparaison, de manière à réguler la vitesse du moteur.

2. Système de régulation de vitesse suivant la revendication 1, dans lequel le paramètre d'entrée est un courant de moteur détecté, le paramètre de sortie est une tension de moteur, et le système comprend des moyens pour établir, à partir de la valeur du courant de moteur détecté, une valeur pour la tension de moteur qui correspondrait au courant de moteur détecté à une vitesse de moteur prédéterminée, et des moyens pour comparer la valeur obtenue de la tension de moteur à la tension de moteur détectée et pour régler la tension de moteur effective en réponse à la comparaison, afin de réguler la vitesse du moteur.

3. Système de régulation de vitesse suivant la revendication 2, dans lequel les moyens d'établissement d'une valeur pour la tension de moteur comprennent un dispositif de mémoire pour stocker des données représentant la variation de la tension de moteur en fonction du courant de moteur pour la vitesse de moteur prédéterminée, et un microprocesseur programmé pour calculer, à partir des données stockées et d'une entrée représentant la valeur du courant de moteur, la valeur de la tension de moteur appropriée au courant de moteur détecté, à la vitesse prédéterminée.

4. Système de régulation de vitesse suivant la revendication 2, dans lequel les moyens d'établissement d'une valeur pour la tension de moteur comprennent un dispositif de mémoire pour stocker des données représentant la variation de la tension de moteur en fonction du courant de moteur pour une vitesse de référence prédéterminée, et un microprocesseur programmé pour calculer, à partir des données stockées et d'une entrée représentant la valeur du courant de moteur détecté, la tension de moteur appropriée au courant de moteur détecté, pour une vitesse de moteur prédéterminée différente de la vitesse de référence.

5. Système de régulation de vitesse suivant la revendication 2, dans lequel la mémoire stocke également des données représentant la variation de la tension de moteur et du courant de moteur pour une vitesse de moteur nulle, et le microprocesseur est programmé pour calculer la tension de moteur appropriée au courant de moteur détecté à la vitesse de moteur prédéterminée,par lecture, à partir des données stockées, des tensions de moteur appropriées au courant de moteur détecté à la vitesse de référence prédéterminée et à la vitesse nulle, calcul de la différence entre les deux valeurs, multiplication de la différence par un facteur égal au rapport entre la vitesse de moteur prédéterminée et la vitesse de référence, et addition au résultat de la tension de moteur à vitesse nulle.

6. Système de régulation de vitesse suivant la revendication 2 ou la revendication 3, dans lequel le microprocesseur est programmé pour produire, à partir des données stockées, la tension de moteur appropriée au courant de moteur détecté pour une vitesse choisie parmi deux vitesses de moteur prédéterminées différentes ou plus, ou pour la valeur désirée d'une vitesse de référence continuellement variable.

7. Système de régulation de vitesse suivant la revendication 1, dans lequel le paramètre d'entrée est la tension de moteur détectée, le paramètre de sortie est le courant de moteur et le système comprend des moyens pour produire, à partir de la valeur de la tension de moteur détectée, une valeur pour le courant de moteur qui correspondrait à la tension de moteur détectée à une vitesse de référence prédéterminée, des moyens de comparaison de la valeur obtenue du courant de moteur au courant de moteur détecté, et de réglage de la tension de moteur en réponse à la comparaison, afin de réguler la vitesse du moteur.

8. Système de régulation de vitesse suivant la revendication 1, dans lequel les paramètres d'entrée sont à la fois la tension de moteur détectée et le courant de moteur détecté, le paramètre de sortie est la vitesse effective du moteur, et le système comprend des moyens de calcul de la valeur de la vitesse de moteur effective à partir des valeurs détectées du courant de moteur et de la tension de moteur, et des moyens de comparaison de la valeur calculée à une vitesse de référence prédéterminée.

9. Système de régulation de vitesse suivant la revendication 8, dans lequel les moyens de calcul de la valeur de la vitesse de moteur effective comprennent un dispositif de mémoire pour stocker des données représentant la variation, en fonction du courant de moteur, d'un paramètre égal ou proportionnel au flux magnétique du moteur, et un microprocesseur programmé pour calculer, à partir des données stockées, une valeur de ce paramètre correspondant au courant de moteur détecté et pour calculer, à partir de la valeur de ce paramètre et des valeurs du courant de moteur détecté et de la tension de moteur détectée, une valeur pour la vitesse de moteur effective.

10. Système de régulation de vitesse suivant une quelconque des revendications précédentes, dans lequel les moyens de réglage comprennent un circuit de hachage pour connexion en série avec le moteur et la source de courant continu, et des moyens de commande du pourcentage de temps actif du circuit de hachage, et les moyens de détection de la tension de moteur comprennent des moyens de détection de la tension de l'alimentation en courant continu et de calcul de la tension de moteur à partir de la valeur détectée de la tension d'alimentation en courant continu et du pourcentage de temps actif du circuit de hachage.

Fig.1.

# Fig.2.

MANUAL CONTROL — 36

38

MOTOR CURRENT MEASURE

SHUNT +ve
SHUNT -ve

MICRO-PROCESSOR — 32

MOSFET DRIVE CIRCUIT

34

BATTERY VOLTAGE MEASURE

B+
B-

40

EPROM — 42

# Fig.3.

Fig.4.